# EUROPÄISCHE PATENTSCHRIFT

(11) **EP 3 605 028 B1**
(45) Veröffentlichungstag und Bekanntmachung des Hinweises auf die Patenterteilung: **14.04.2021**
(21) Anmeldenummer: 18186361.4
(22) Anmeldetag: 30.07.2018
(51) Int. Cl.: G01F 23/26

(54) **VERFAHREN ZUM BESTIMMEN EINES SCHALTZUSTANDS EINES IMPEDANZSENSORS UND IMPEDANZSENSOR**
METHOD FOR DETERMINING A SWITCHING CONDITION OF AN IMPEDANCE SENSOR AND IMPEDANCE SENSOR
PROCÉDÉ DE DÉTERMINATION D'UN ÉTAT DE COMMUTATION D'UN CAPTEUR D'IMPÉDANCE ET CAPTEUR D'IMPÉDANCE

(43) Veröffentlichungstag der Anmeldung: 05.02.2020
(73) Patentinhaber: VEGA Grieshaber KG, 77709 Wolfach (DE)
(72) Erfinder: Allgaier, Volker, 77761 Haslach i. K. (DE); Fehrenbach, Dominik, 78628 Rottweil (DE)
(74) Vertreter: Patentanwälte Bauer Vorberg Kayser

(56) Entgegenhaltungen:
- EP-A1- 3 118 591
- EP-A1- 3 153 829
- EP-A1- 3 312 571
- DE-A1-102009 060 742

## Beschreibung

Verfahren zum Bestimmen eines Schaltzustands eines Impedanzsensors gemäß dem Oberbegriff des Patentanspruchs 1 und einen Impedanzsensor zur Implementierung des Verfahrens gemäß Patentanspruch 6.

Impedanzgrenzstandsensoren sind grundsätzlich aus dem Stand der Technik, bspw. zur Messung von Grenz- oder Füllständen bekannt. Typische Anwendungen für die Erfassung einer vordefinierten Füllhöhe sind Prozessbehältnisse, wie beispielsweise Prozesstanks, Lagertanks, Silos oder Rohrleitungen in der Prozessindustrie. Impedanzgrenzstandsensoren, werden dabei häufig als sog. Grenzschalter, d.h. zur Bestimmung, ob ein Füllmedium eine bestimmte Füllhöhe, den sog. Grenzstand, über- oder unterschreitet, in unterschiedlichen Flüssigkeiten, sowie granulierten und pulverförmigen Schüttgütern eingesetzt.

Es sind auch andere Arten von Grenzschaltern bzw. Grenzstandsensoren bekannt, die je nach Einsatzgebiet, Prozessbedingungen und Eigenschaften des Füllmediums ausgewählt werden. Neben Impedanzgrenzstandsensoren kommen Sensoren, die nach dem TDR (Time Domain Reflectometry) Prinzip arbeiten, oder Vibrationsgrenzstandsensoren oder kapazitiv arbeitende Sensoren zum Einsatz. Ein Schaltbefehl des Grenzschalters kann beispielsweise Befülleinrichtungen oder Entleereinrichtungen starten oder stoppen um entsprechend ein Überlaufen oder Leerlaufen des jeweiligen Prozessbehältnisses zu vermeiden.

In der vorliegenden Anmeldung werden an Stelle des Begriffs Impedanzgrenzstandsensor der Einfachheit halber auch die Begriffe Impedanzsensor, Grenzschalter und Grenzstandmelder gleichwertig benutzt.

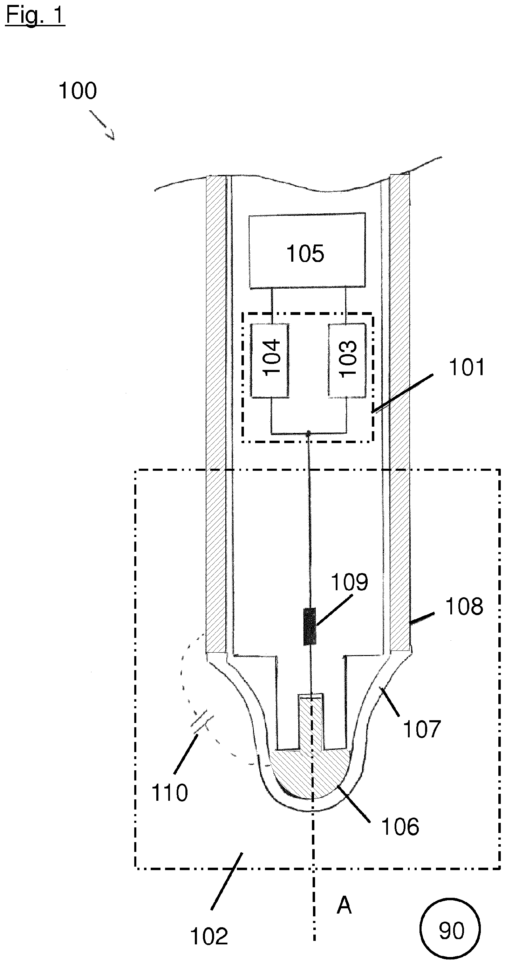

Ein bekannter Impedanzsensor 100 ist in Figur 1 gezeigt.

Figur 1 zeigt ein vereinfachtes Schnittbild mit Schaltungsblöcken eines Impedanzsensor 100 gemäß dem Stand der Technik. Im Wesentlichen besteht der Impedanzsensor 100, gemäß dem Stand der Technik aus einer Elektronikeinheit 101 und einer Messsonde 102. Die Messsonde 102, ist im vorliegenden Ausführungsbeispiel als Serienschwingkreis ausgebildet. Zwischen einer Messelektrode 106 und einer Bezugselektrode 108 bildet sich eine Messkapazität 110 aus, welche mit einer diskreten Induktivität 109 zu dem als Serienschwingkreis ausgebildeten Messschwingkreis verschaltet ist.

Die Messelektrode 106 ist rotationssymmetrisch zu einer Längsachse L des Impedanzsensors 100 ausgebildet und über eine Isolierung 107 von einem Prozessraum 90 getrennt. Die Bezugselektrode 108 ist bei dem vorliegenden Impedanzsensor 100 ebenfalls rotationssymmetrisch zu der Längsachse L ausgebildet. Die Bezugselektrode 108 ist dafür im vorliegenden Ausführungsbeispiel als Rohr ausgebildet, das gleichzeitig einen Teil eines Sensorgehäuses bildet. Die Messelektrode 106 ist in Richtung der Längsachse L gesehen vor dem Rohr angeordnet und von der an dem Rohr angeordneten Isolierung 107 umgeben. Die Isolierung 107 bildet gleichzeitig einen vorderseitigen Abschluss des Gehäuses.

Vorteilhafterweise wird die diskrete Induktivität 109 so gewählt, dass sich eine Resonanzfrequenz fres des Schwingkreises für unterschiedlichste Medien bzw. Bedeckungszustände (leer, voll und verschmutzt) zwischen 100 MHz und 200 MHz einstellt. Ein Betrag einer sich über die Frequenz ändernden komplexwertigen Impedanz |Z| dieses Messschwingkreises wird vorteilhafterweise zwischen 100 MHz und 200 MHz analysiert, d.h. der Messschwingkreis wird mittels eines Frequenzgenerators 103 mit einem Frequenzsweep mit Frequenzen zwischen 100 MHz und 200 MHz angeregt und ein Antwortsignal (Frequenzantwort) des Messschwingkreises mit einem Frequenzdetektor 104 detektiert. Befindet sich ein Medium im Bereich der Messsonde 102, ändert sich das Impedanzverhalten des Messschwingkreises, d.h. insbesondere verschiebt sich dessen Resonanzfrequenz fres, an der sich ein Minimum der Impedanz Z ausbildet.

Unter einem Frequenzsweep wird die sequenzielle Anregung mit einer Mehrzahl von aufeinander folgenden Frequenzen innerhalb eines Frequenzbereichs verstanden, wobei der Frequenzbereich idealerweise sämtliche möglichen Resonanzfrequenzen des Messschwingkreises enthalten sollte. Die Erzeugung der Schwingfrequenz erfolgt mit einem spannungsgesteuerten Oszillator (VCO) welcher über einen Digital-Analog-Konverter (DAC) eines Mikrocontrollers angesteuert wird. In einer Zeit von beispielsweise 100 ms soll der Frequenzbereich von 100 MHz bis 200 Mhz durchgesweept werden.

Die Änderung der Impedanz des Messschwingkreises wird für eine Auswertung in einer Auswerte- und Steuereinheit 105 herangezogen. Konkret wird die Frequenzantwort hinsichtlich einer Frequenzänderung Δf und einer Änderung der Amplitude eines Minimums der Impedanz Z, auch als Amplitudenänderung bezeichnet, ausgewertet und daraus ein Schaltbefehl generiert. Alternativ könnte die Auswertung aber auch bei einem Maximum der Impedanz Z erfolgen.

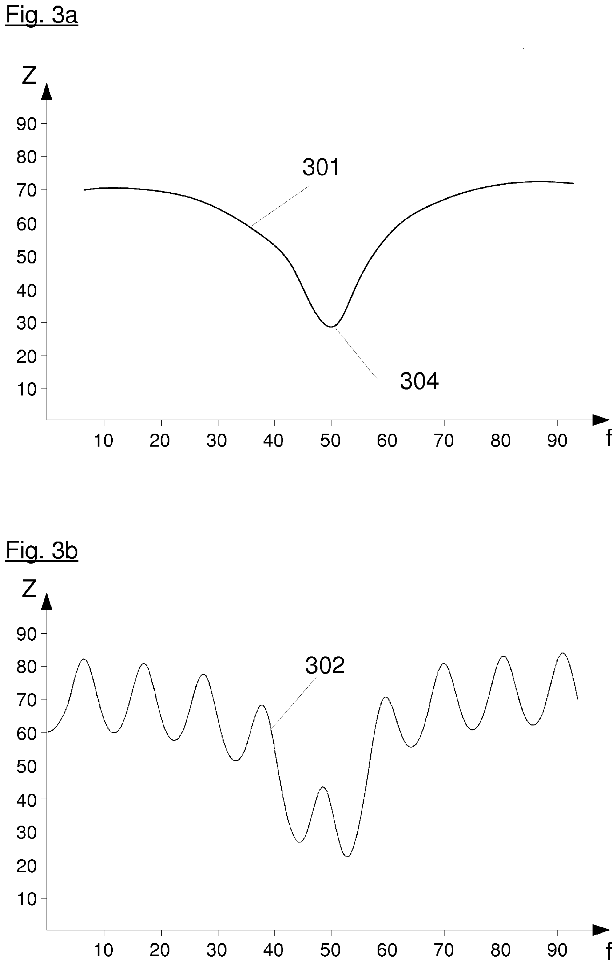

Eine beispielhaftes ungestörtes Antwortsignal 301 ist in Figur 3a dargestellt.

Ein Ausgangssignal des spannungsgesteuerten Oszillators (VCO) wird auf den Schwingkreis des Impedanzgrenzschalters gegeben, der in ungestörtem Zustand mit dem in Figur 3a dargestellten Impedanzverhalten reagiert. An der Resonanzstelle des Impedanzgrenzschalters 100 erhält man in der ungestörten Resonanzkurve 301 genau ein Minimum 304.

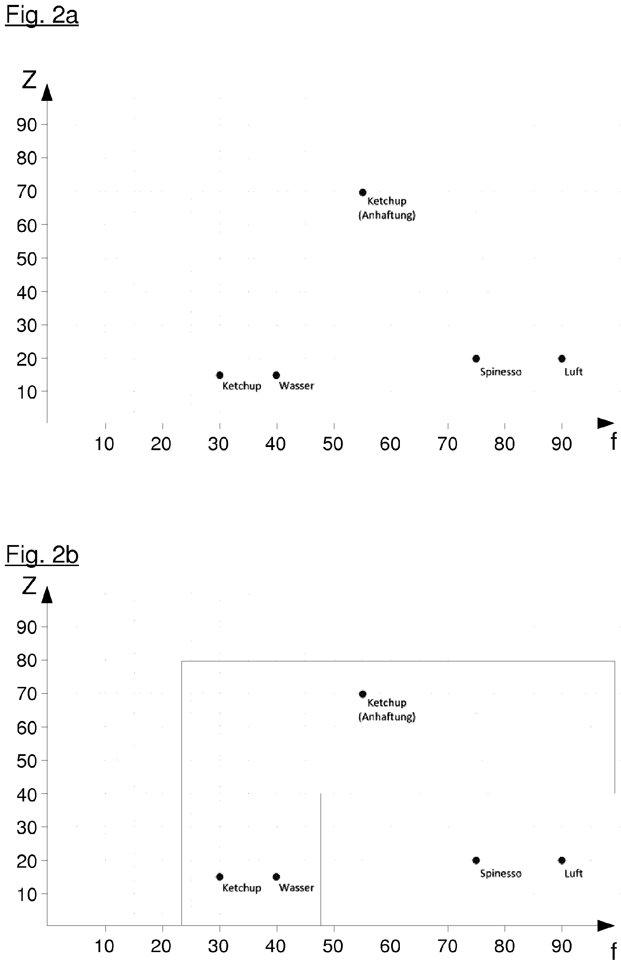

In den Figuren 2a und 2b ist für bekannte Impedanzsensoren 100, wie sie in Figur 1 beschrieben sind, die Lage des Minimums 304 der Amplitude der Impedanz Z für verschiedene Bedeckungszustände und Medien gezeigt. Die Abszisse des Koordinatensystems zeigt die Frequenz f, die Ordinate die Amplitude der Impedanz Z des empfangenen Antwortsignals. Die Frequenz ist in 0 % bis 100 % der Anregungsfrequenz f von 100 MHz bis 200 MHz dargestellt. Die Amplitude ist ebenfalls normiert auf die Amplitude des Anregungssignals von 0 % bis 100 % dargestellt.

Dargestellt ist die Lage der Minima des Antwortsignals d.h. die Lage des Resonanzpunktes bei einer Bedeckung der Sonde mit Ketchup, Wasser oder Spinesso, bei einer freien Sonde in Luft oder bei Anhaftung von Ketchup an der Sonde. Aus der Kenntnis über diese Minima des Antwortsignals, abhängig von dem zu detektierenden Medium kann der Messbereich des Impedanzsensors in drei Bereiche (bedeckt, unbedeckt, Anhaftung) unterteilt und mit den in Figur 2b dargestellten Schaltschwellen versehen werden.

Durch Störsignale, bspw. elektromagnetische Einstrahlungen von bspw. Pumpen oder Motoren, die in der Nähe des Impedanzsensors betriebenen werden, kommt es im Stand der Technik immer wieder zu Fehlschaltungen, da sowohl die Frequenz als auch die Amplitude der Impedanzkurve, insbesondere im Bereich des Minimums nicht mehr korrekt ermittelt werden kann.

In Figur 3a ist qualitativ das ungestörte Antwortsignal der Messsonde 102 bei bedeckter Messsonde 102 dargestellt. Aus diesem Antwortsignal kann ein eindeutiges Minimum mit einer zuordenbaren Frequenz und Amplitude ermittelt werden. Wird dieses Antwortsignal durch elektromagnetische Störungen überlagert entsteht ein gestörtes Antwortsignal 302, wie es in Figur 3b gezeigt ist. Das gestörte Antwortsignal der Figur 3b weist eine Mehrzahl von Minima und Maxima bei unterschiedlichen Frequenzen f auf, die jeweils unterschiedliche Amplitudenwerte aufweisen. Aus diesem Signal kann die Lage des tatsächlichen Minimums nicht mehr zuverlässig ermittelt werden, sodass es im Stand der Technik zu Fehlschaltungen aufgrund der elektromagnetischen Störungen kommen kann.

Weiterer Stand der Technik ist aus DE 10 2009 060 742 A1, EP 3 153 829 A1, EP 3 312 571 A1 oder EP 3 118 591 A1 bekannt.

Hier setzt die vorliegende Erfindung an.

Es ist die Aufgabe der vorliegenden Erfindung ein Verfahren zum Bestimmen eines Schaltzustands eines Impedanzsensors, insbesondere eines auf einer Impedanzbestimmung beruhenden Grenzstandschalters anzugeben, das trotz elektromagnetischer Störungen zuverlässig einen korrekten Messwert bzw. Schaltzustand ausgibt. Ferner ist es eine Aufgabe der vorliegenden Erfindung einen Grenzstandsensor anzugeben, der dieses Verfahren implementiert.

Diese Aufgaben werden durch ein Verfahren mit den Merkmalen des Patentanspruchs 1 sowie einen Grenzstandsensor mit den Merkmalen des Patentanspruchs 6 gelöst. Vorteilhafte Weiterbidlungen sind Gegenstand abhängiger Patentansprüche. Ein erfindungsgemäßes Verfahren zum Bestimmen eines Schaltzustands eines Impedanzsensors mit einer Messsonde, die durch ein die Messsonde umgebendes Medium in einer Kapazität beeinflussbar ist, einem Messschwingkreis, in dem die Messsonde als kapazitätsbestimmendes Element angeordnet ist, einer Elektronikeinheit mit einem Signalgenerator zur Anregung des Messschwingkreises und einem Signaldetektor zur Ermittlung eines Antwortsignals des Messschwingkreises und einer Auswerte- und Steuereinheit, die mit der Elektronikeinheit verbunden ist weist folgende Schritte auf:
Zunächst wird der Signalgenerator mit einem Eingagnssignal angesteuert, woraufhin dieser eine Frequenzrampe, einen sog. Frequenzsweep an den Messchwingkreis ausgibt.

Es wird dann das Antwortsignal des Messschwingkreises ermittelt und ein Schaltzustand auf Basis eines Ausgabewerts ausgegeben, wobei der Ausgabewert wie folgt bestimmt wird.

Das erfindungsgemäße Verfahren zeichnet sich dadurch aus, dass eine Anzahl von Amplitudenminima der Frequenzantwort ermittelt wird, und für den Fall, dass genau ein Minimum, d.h. Amplitudenminimum der Frequenzantwort ermittelt wird, dieses Minimum als Ausgabewert zur Bestimmung des Schaltzustands ausgegeben wird. Für den Fall, dass mehr als ein Minimum ermittelt wird, wird wenigstens eine Annäherungskurve an die Amplitudenminima und/oder Amplitudenmaxima ermittelt und der Ausgabewert auf Basis der wenigstens einen Annäherungskurve bestimmt. Eine Bestimmung des Ausgabewertes auf Basis der wenigstens einen Annäherungskurve umfasst dabei insbesondere die Ermittlung des Ausgabewerts unmittelbar aus der wenigstens Annäherungskurve oder aus einer Weiterverarbeitung derselben. Insbesondere können für die Ermittlung des Ausgabewertes bspw. zwei Annäherungskurven, bspw. eine Annäherungskurve an die Minima des Antwortsignals und eine Annäherungskurve an die Maxima des Antwortsignals herangezogen werden und der Ausgabewert aus einer Mittelwertbildung über diese beiden Annäherungskurven abgeleitet werden.

Eine Möglichkeit die Annäherungskurven zu ermittlen ist eine Polynominterpolation. Bei dieser Polynominterpolation werden bspw. für die Annäherungskurve an die Minima des Antwortsignals die Minima als Stützstellen verwendet, entsprechendes gilt für die Annäherungskurve an die Maxima. Ein Polynom 6. Odnung bietet eine ausreichende Genauigkeit und erfordert eine Anzahl von min.6 Stützstellen, die typischerweise bei einer gestörten Messung erhalten werden.

Alternativ kann die wenigstens eine Annäherungskurve durch eine Kurvenanpassung, ein sog. Fitting an die Minima und/oder Maxima der Frequenzantwort ermittelt werden. Unter einer Kurvenanpassung versteht man eine Technik mit der man versucht, eine gegebene mathematische Modellfunktion bestmöglich an Datenpunkte anzupassen. Im vorliegenden Fall ist bekannt, wie das Antwortsignal des Messschwingkreises in ungestörtem Zustand aussieht. Dieses Antwortsignal lässt sich mathematisch als Funktion beschreiben und kann als Modellfunktion bspw. in einem Datenspeicher des Impedanzsensors abgelegt werden. Bei der Kurvenanpassung, dem Fitting, wird die gegebene Modellfunktion durch Anpassungen, insbesondere Strecken und Tauchen der Modellfunktion an die durch die Minima/Maxima gegebenen Datenpunkte möglichst gut angepasst und so die Annäherungskurve erhalten. Bspw. kann eine Minimierung der Summe der Abstandsquadrate zwischen der Modellfunktion und den gegebenen Punkten, also den Minima bzw. Maxima erfolgen.

Besonders gute Ergebnisse liefert das Verfahren, wenn zwei Annäherungskurven ermittelt werden, wobei die erste Annäherunskurve an die Amplitudenminima und die zweite Annäherungskurve an die Amplitudenmaxima ermittelt wird und wobei eine dritte Kurve durch eine Mittelwertbildung zwischen der ersten Annäherungskurve und der zweiten Annäherungskurve ermittelt und der Ausgabewert auf Basis der dritten Kurve ermittelt wird.

Ein Vorgehen, bei dem der Ausgabewert auf Basis von zwei Annäherungskurven, von denen auf Basis der Amplitudenminima und die andere auf Basis der Amplitudenmaxima ermittelt wird und anschließend eine Mittelwertbildung zwischen diesen beiden Annäherungskurven erfolgt, ermittelt wird, hat den Vorteil, dass Störsignale, die mit im Wesentlichen gleicher Leistung und damit Amplitude das Antwortsignal des Messschwingkreises überlagern sehr gut entfernt werden können. Die dritte Kurve entspricht mit einer Genauigkeit von +/- 0,5% in beiden Achsen dem ungestörten Antwortsignal, sodass mit hoher Präzision die Lage des Minimums des Antwortsignals ermittelt werden kann.

Der Ausgabewert kann insbesondere in diesem Fall, aber auch in allen anderen Fällen durch Bestimmung eines Minimums ermittelt werden. Das Minimum kann bspw. durch Bestimmung einer Nullstelle der ersten Ableitung oder durch numerische Ansätze ermittelt werden.

Ein erfindungsgemäßer Grenzstandschalter mit einem Impedanzsensor mit einer Messsonde, die durch ein die Messsonde umgebendes Medium in einer Kapazität beeinflussbar ist, einem Messschwingkreis, in dem die Messsonde als kapazitätsbestimmendes Element angeordnet ist, einer Elektronikeinheit mit einem Signalgenerator zur Anregung des Messschwingkreises und einem Signaldetektor zur Ermittlung eines Antwortsignals des Messschwingkreises und einer Auswerte- und Steuereinheit, die mit der Elektronikeinheit verbunden ist, ist ausgebildet zur Durchführung des Verfahrens gemäß einem der vorhergehenden Ansprüche.

Vorteilhafterweise weist der Grenzstandschalter und/oder der Impedanzsensor einen Speicher auf, in dem das ungestörte Antwortsignal des Messchwingkreises abgespeichert ist, bspw. als Funktion, als Polynom oder Numerisch in Form einer Wertetabelle.

Ferner ist es vorteilhaft, wenn der Grenzstandschalter eine Recheneinheit aufweist, die geeignet ausgebildet ist, wenigstens eine Annäherungskurve bspw. durch Interpolation und/oder Kurvenannäherung und/oder Mittelwertbildung zu bestimmen.

Die vorliegende Erfindung wird nachfolgend anhand von Ausführungsbeispielen unter Bezugnahme auf die beigefügten Figuren eingehend erläutert. Es zeigen:
- Figur 1: einen Impedanzsensor gemäß dem Stand der Technik (schon behandelt),
- Figuren 2a und 2b: die Lage der Minima im Antwortsignal eines Impedanzsensors für unterschiedliche Bedeckungszustände und Medien, sowie mögliche Schaltschwellen
- Figuren 3a und 3b: ein ungestörtes und ein gestörtes Antwortsignal des Impedanzsensors gemäß Figur 1
- Figur 4: eine graphische Darstellung des Vorgehens zur Ermittlung des tatsächlichen, ungestörten Antwortsignals ausgehend von einem gestörten Antwortsignal und
- Figur 5: ein Ablaufdiagramm eines Verfahrens zur Ermittlung des ungestörten Antwortsignals.

In den Figuren bezeichnen - soweit nicht anders angegeben - gleiche Bezugszeichen gleiche Komponenten mit gleicher Funktion.

Der Aufbau des Impedanzsensors 100 gemäß der vorliegenden Anmeldung entspricht im Wesentlichen dem aus dem Stand der Technik bekannten und in Zusammenhang mit Figur 1 beschriebenen Aufbau. Der Aufbau der Messsonde 102 entspricht dem aus dem Stand der Technik bekannten Aufbau, wobei abweichend zu der Darstellung in Figur 1 auch jeder andere geeignete Aufbau einer Messsonde 102 für einen Impedanzsensor 100 gewählt werden kann.

Ein wesentlicher Unterschied im Aufbau des Impedanzsensors 100 gemäß der vorliegenden Anmeldung zum Stand der Technik liegt in der Auswerte- und Steuereinheit 105, die im Unterschied zum Stand der Technik dazu ausgebildet ist, wenigstens eine Annäherungskurve an die Amplitudenminima und/oder Amplitudenmaxima zu ermitteln. Dafür weist die Auswerte- und Steuereinheit 105 eine Interpolationseinheit oder eine Einheit zur Ermittlung eines Kurvenfits auf.

Die Interpolationseinheit kann beispielsweise geeignet ausgebildet sein eine Polynominterpolation für ein Polynom 6. Ordnung mit den Amplitudenminima oder den Amplitudenmaxima als Stützstellen durchzuführen.

Die Einheit zur Ermittlung eines Kurvenfits kann beispielsweise einen Speicher aufweisen, in dem der ungestörte Verlauf des Antwortsignals der Messsonde 102 abgespeichert ist, und geeignet ausgebildet sein diesen ungestörten Verlauf an die Amplitudenminima und/oder die Amplitudenmaxima zu fitten, d. h. eine Kurvenanpassung mit einer bestimmten Art der Fehlerminimierung an die Punkte der Amplitudenminima bzw. der Amplitudenmaxima durchzuführen.

Ferner kann die Auswerte- und Steuereinheit eine Einheit zur Mittelwertbildung aufweisen, die auf Basis der Annäherungskurven an die Amplitudenminima und die Amplitudenmaxima - wenn beide Annäherungskurven bestimmt werden - einen Mittelwert bestimmt, aus dem dann das Amplitudenminimum abgeleitet werden kann.

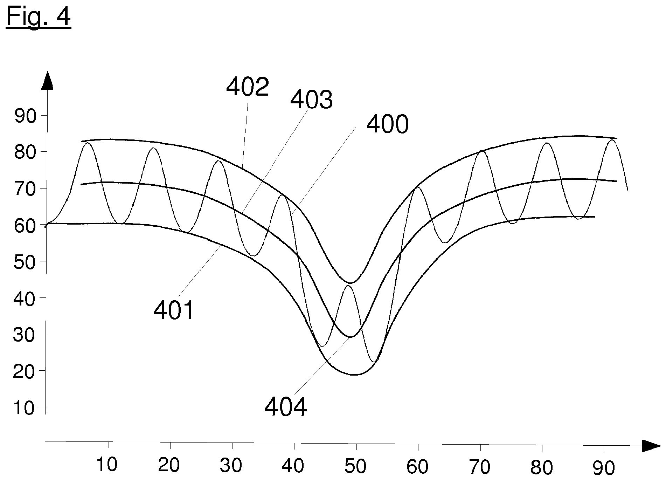

In Figur 4 ist ein gestörtes Antwortsignal 400 der Messsonde 102 dargestellt, das beispielsweise durch Überlagerung des ungestörten Antwortsignals des Messschwingkreises mit einer elektromagnetischen Störung mit einer Frequenz von etwa 1 kHz entsteht. Auf Basis des gestörten Antwortsignals 400 ist es nicht möglich, das korrekte Amplitudenminimum 404 und dessen Lage und damit den korrekten Schaltzustand des Impedanzsensors 100 zu ermitteln. Das Verfahren zum Bestimmen eines Schaltzustands des Impedanzsensors 100 gemäß der vorliegenden Anmeldung erkennt, dass das gestörte Antwortsignal 400 eine Vielzahl von Minima aufweist und dass eine Ermittlung der Lage des korrekten Amplitudenminimums damit nicht möglich ist.

Zur Ermittlung der Lage des korrekten Amplitudenminimums wird zunächst die Lage der Amplitudenminima des gestörten Antwortsignals 400 ermittelt und anschließend eine Kurvenanpassung einer im Speicher der Auswerte- und Steuereinheit 105 als Modellfunktion hinterlegten Kurve an die Amplitudenminima durchgeführt. Daraus wird eine erste Annäherungskurve 401 erhalten. Ferner wird die Lage der Amplitudenmaxima des gestörten Antwortsignals 400 ermittelt und ebenfalls eine Kurvenanpassung der im Speicher der Auswerte- und Steuereinheit 105 hinterlegten Kurve an die Amplitudenmaxima durchgeführt, woraus eine zweite Annäherungskurve 402 erhalten wird. In einem weiteren Schritt wird ein dritte Annäherungskurve 403 durch Mittelwertbildunge zwischen den beiden ersten Annäherungskurven 401,402 bestimmt und die Lage des Amplitudenminimums 404 aus dem Mittelwert 403 bestimmt.

Die so ermittelte Lage des Amplitudenminimums 404 des Mittelwerts 403 entspricht mit hoher Genauigkeit der Lage des Amplitudenminimums 304 des ungestörten Antwortsignals 301, wie es aus Figur 3a hervorgeht.

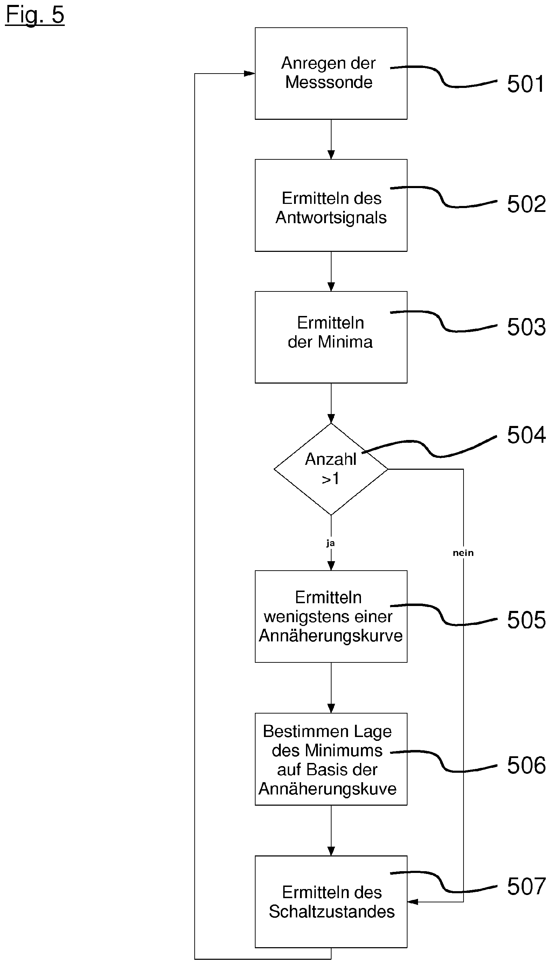

In Figur 5 ist exemplarisch ein möglicher Ablauf des Verfahrens zur Bestimmung des Schaltzustandes eines Impedanzsensors der vorliegenden Anmeldung dargestellt.

In einem ersten Schritt 501 wird die Messsonde 102 bzw. der Messschwingkreises des Impedanzsensors 100 mit einem Frequenzsweep in einem Frequenzbereich zwischen 100 MHz und 200 MHz angeregt, wobei die Messsonde 102 des Impedanzsensors 100 mit einem Antwortsignal auf diese Anregung reagiert.

Das Antwortsignal wird in einem zweiten Schritt 502 ermittelt, wobei die jeweilige Amplitude des Antwortsignals bei der zugehörigen Anregungsfrequenz ermittelt wird.

In einem dritten Schritt 503 werden die Minima des Antwortsignals ermittelt, wobei in einem vierten Schritt 504 eine Anzahl der Minima bestimmt wird. Enthält das Antwortsignal lediglich ein einziges Minimum, so kann auf Basis dieses Minimums der Schaltzustand des Impedanzsensors, d. h. der Bedeckungszustand der Messsonde 102 ermittelt und ausgegeben werden.

Wird im vierten Schritt 504 ermittelt, dass mehr als ein Minimum im Antwortsignal enthalten ist, so wird in einem fünften Schritt 505 eine Annäherungskurve bestimmt. Im vorliegenden Ausführungsbeispiel wird zur Ermittlung der Annäherungskurve eine erste Kurvenanpassung einer in einem Speicher der Auswerte- und Steuereinheit 105 hinterlegten Kurve an die Minima des Antwortsignals durchgeführt, eine zweite Kurvenanpassung der in dem Speicher der Auswerte- und Steuereinheit 105 hinterlegten Kurve an die Maxima des Antwortsignals durchgeführt und anschließend ein Mittelwert aus den beiden so angepassten Kurven gebildet.

In einem sechsten Schritt 506 wird anschließend auf Basis der Annäherungskurve, d. h. im vorliegenden Ausführungsbeispiel auf Basis des zwischen den beiden Annäherungskurven gebildeten Mittelwerts das Amplitudenminimum bestimmt und auf Basis dieses Amplitudenminimums der Schaltzustand des Impedanzsensors in einem siebten Schritt 507 ermittelt und ausgegeben.

### Bezugszeichenliste

- 100: Impedanzsensor
- 101: Elektronikeinheit
- 102: Messsonde
- 103: Frequenzgenerator / Signalgenerator
- 104: Frequenzdetektor / Signaldetektor
- 105: Auswerte- und Steuereinheit
- 106: Messelektrode
- 107: Isolierung
- 108: Bezugselektrode
- 109: Induktivität

- 110: Messkapazität

- 301: ungestörtes Antwortsignal
- 302: gestörtes Antwortsignal
- 304: Minimum

- 400: gestörtes Antwortsignal
- 401: erste Annäherungskurve
- 402: zweite Annäherungskurve
- 403: dritte Annäherungskurve
- 404: Minimum

- 501-507: Verfahrensschritte

- f: Frequenz
- Fres: Resonanzfrequenz
- Z: Impedanz/Amplitude

## Patentansprüche

1. Verfahren zum Bestimmen eines Schaltzustands eines Impedanzsensors (100) mit
- einer Messsonde (102), die durch ein die Messsonde (102) umgebendes Medium in einer Kapazität beeinflussbar ist,
- einem Messschwingkreis, in dem die Messsonde (102) als kapazitätsbestimmendes Element angeordnet ist,
- einer Elektronikeinheit (101) mit einem Signalgenerator (103) zur Anregung des Messschwingkreises und einem Signaldetektor (104) zur Ermittlung eines Antwortsignals des Messschwingkreises und
- einer Auswerte- und Steuereinheit (105), die mit der Elektronikeinheit (101) verbunden ist mit folgenden Schritten:
- Ansteuern des Signalgenerators (103) mit einem Eingangssignal,
- Ermitteln des Antwortsignals des Messschwingkreises,
- Ausgeben eines Schaltzustandes auf Basis eines Ausgabewerts,
- Ermitteln einer Anzahl von Amplitudenminima der Frequenzantwort,
- für den Fall, dass genau ein Amplitudenminimum ermittelt wird, ausgeben des Amplitudenminimums als Ausgabewert, **gekennzeichnet durch** den Schritt
- für den Fall, dass mehr als ein Amplitudenminimum aus der Frequenzantwort ermittelt wird, Ermitteln wenigstens einer Annäherungskurve (401, 402, 403) an die Amplitudenminima und/oder an Amplitudenmaxima und Ermitteln des Ausgabewertes auf Basis der wenigsten einen Annäherungskurve.

2. Verfahren gemäß Patentanspruch 1,
**dadurch gekennzeichnet, dass** die wenigstens eine Annäherungskurve (401, 402, 403) durch eine Polynominterpolation ermittelt wird.

3. Verfahren gemäß Patentanspruch 2,
**dadurch gekennzeichnet, dass** die wenigstens eine Annäherungskurve (401, 402, 403) durch einen Kurvenfit an die Amplitudenminima und/oder Amplitudenmaxima des Antwortsignals ermittelt wird.

4. Verfahren gemäß einem der vorhergehenden Patentansprüche,
**dadurch gekennzeichnet, dass** zwei Annäherungskurven ermittelt werden, wobei die erste Annäherungskurve (401) an die Amplitudenminima und die zwweite Annäherungskurve (402) an die Amplitudenmaxima ermittelt wird und wobei eine dritte Kurve (403) durch eine Mittelwertbildung zwischen der ersten Annäherungskurve (401) und der zweiten Annäherungskurve (402) ermittelt und der Ausgabewert auf Basis der dritten Kurve (403) ermittelt wird.

5. Verfahren gemäß einem der vorhergehenden Ansprüche,
**dadurch gekennzeichnet, dass** der Ausgabewert durch Bestimmung eines Amplitudenminimums ermittelt wird.

6. Grenzstandschalter mit einem Impedanzsensor (100) mit
- einer Messsonde (102), die durch ein die Messsonde (102) umgebendes Medium in einer Kapazität beeinflussbar ist,
- einem Messschwingkreis, in dem die Messsonde (102) als kapazitätsbestimmendes Element angeordnet ist,
- einer Elektronikeinheit (101) mit einem Signalgenerator (103) zur Anregung des Messschwingkreises und einem Signaldetektor (104) zur Ermittlung eines Antwortsignals des Messschwingkreises und
- einer Auswerte- und Steuereinheit (105), die mit der Elektronikeinheit (101) verbunden ist, wobei der Impedanzsensor ausgebildet ist zur Durchführung des Verfahrens gemäß einem der vorhergehenden Ansprüche.

7. Grenzstandschalter gemäß Anspruch 6,
**dadurch gekennzeichnet, dass** die Auswerte- und Steuereinheit (105) eine Anordnung zum Kurvenfit und/oder zur Interpolation aufweist.

## Claims

1. A method for identifying a switching state of an impedance sensor (100) with
- a measuring probe (102) that can be influenced in a capacitance by a medium surrounding the measuring probe (102),
- a measuring resonant circuit in which the measuring probe (102) is disposed as a capacitance-determining element,
- an electronic unit (101) with a signal generator (103) for exciting the measuring resonant circuit and a signal detector (104) for determining a response signal of the measuring resonant circuit, and
- an evaluation and control unit (105) connected to the electronic unit (101), comprising the following steps:
- controlling the signal generator (103) with an input signal,
- determining the response signal of the measuring resonant circuit,
- outputting a switching state on the basis of an output value,
- determining a number of amplitude minima of the frequency response,
- for the case that exactly one amplitude minimum is determined, outputting the amplitude minimum as the output value,
**characterized by** the step
- for the case that more than one amplitude minimum is determined from the frequency response,
determining at least one approximation curve (401, 402, 403) to the amplitude minima and/or amplitude maxima, and determining the output value on the basis of the at least one approximation curve.

2. The method according to patent claim 1,
**characterized in that**
the at least one approximation curve (401, 402, 403) is determined by a polynomial interpolation.

3. The method according to patent claim 2,
**characterized in that**
the at least one approximation curve (401, 402, 403) is determined by a curve fit to the amplitude minima and/or amplitude maxima of the response signal.

4. The method according to any one of the preceding patent claims,
**characterized in that**
two approximation curves are determined, wherein the first approximation curve (401) to the amplitude minima is determined, and the second approximation curve (402) to the amplitude maxima, and wherein a third curve (403) is determined by averaging the first approximation curve (401) and the second approximation curve (402), and the output value is determined on the basis of the third curve (403).

5. The method according to any one of the preceding claims,
**characterized in that**
the output value is determined by identifying an amplitude minimum.

6. A limit switch with an impedance sensor (100) with
- a measuring probe (102) that can be influenced in a capacitance by a medium surrounding the measuring probe (102),
- a measuring resonant circuit in which the measuring probe (102) is disposed as a capacitance-determining element,
- an electronic unit (101) with a signal generator (103) for exciting the measuring resonant circuit and a signal detector (104) for determining a response signal of the measuring resonant circuit, and
- an evaluation and control unit (105) connected to the electronic unit (101), wherein the impedance sensor is configured for carrying out the method according to any one of the preceding claims.

7. The limit switch according to claim 6,
**characterized in that**
an evaluation and control unit (105) includes a curve fit and/or interpolation assembly.

## Revendications

1. Procédé de détermination d'un état de commutation d'un capteur d'impédance (100) comprenant
- une sonde de mesure (102) qui peut être influencée en une capacité par un milieu entourant la sonde de mesure (102),
- un circuit résonant de mesure dans lequel la sonde de mesure (102) est agencée comme élément déterminant la capacité,
- une unité électronique (101) ayant un générateur de signaux (103) destiné à exciter le circuit résonant de mesure ainsi qu'un détecteur de signaux (104) destiné à déterminer un signal de réponse du circuit résonant de mesure, et
- une unité d'évaluation et de commande (105) qui est connectée à l'unité électronique (101), comprenant les étapes suivantes consistant à:
- commander le générateur de signaux (103) avec un signal d'entrée,
- déterminer le signal de réponse du circuit résonant de mesure,
- délivrer un état de commutation sur la base d'une valeur de sortie,
- déterminer un nombre de minimums d'amplitude de la réponse de fréquence,
- dans le cas où exactement un minimum d'amplitude (304) est déterminé, délivrer le minimum d'amplitude en tant que valeur de sortie,
**caractérisé par** l'étape consistant à:
- dans le cas où plus d'un minimum d'amplitude est déterminé à partir de la réponse de fréquence, déterminer au moins une courbe d'approximation (401, 402, 403) des minima d'amplitude et/ou de maxima d'amplitude et déterminer la valeur de sortie sur la base de ladite au moins une courbe d'approximation.

2. Procédé selon la revendication 1, **caractérisé par le fait que** ladite au moins une courbe d'approximation (401, 402, 403) est déterminée par une interpolation polynomiale.

3. Procédé selon la revendication 2, **caractérisé par le fait que** ladite au moins une courbe d'approximation (401, 402, 403) est déterminée par un ajustement de courbe aux minima d'amplitude et/ou maxima d'amplitude du signal de réponse

4. Procédé selon l'une quelconque des revendications précédentes, **caractérisé par le fait que** deux courbes d'approximation sont déterminées, dans lequel on détermine la première courbe d'approximation (401) des minima d'amplitude et la deuxième courbe d'approximation (402) des maxima d'amplitude, et dans lequel une troisième courbe (403) est déterminée par une formation de moyenne entre la première courbe d'approximation (401) et la deuxième courbe d'approximation (402) et la valeur de sortie est déterminée sur la base de la troisième courbe (403).

5. Procédé selon l'une quelconque des revendications précédentes, **caractérisé par le fait que** la valeur de sortie est déterminée en déterminant un minimum d'amplitude.

6. Interrupteur de niveau limite ayant un capteur d'impédance (100) comprenant
- une sonde de mesure (102) qui peut être influencée en une capacité par un milieu entourant la sonde de mesure (102),
- un circuit résonant de mesure dans lequel la sonde de mesure (102) est agencée comme élément déterminant la capacité,
- une unité électronique (101) ayant un générateur de signaux (103) destiné à exciter le circuit résonant de mesure ainsi qu'un détecteur de signaux (104) destiné à déterminer un signal de réponse du circuit résonant de mesure, et
- une unité d'évaluation et de commande (105) qui est connectée à l'unité électronique (101), dans lequel ledit capteur d'impédance est conçu pour mettre en œuvre le procédé selon l'une quelconque des revendications précédentes.

7. Interrupteur de niveau limite selon la revendication 6, **caractérisé par le fait que** l'unité d'évaluation et de commande (105) présente un ensemble d'ajustement de courbe et/ou d'interpolation.
